# EUROPEAN PATENT SPECIFICATION

(11) **EP 3 147 593 B1**
(45) Date of publication and mention of the grant of the patent: **17.03.2021**
(21) Application number: 15186352.9
(22) Date of filing: 22.09.2015
(51) Int. Cl.: F25B 41/06

(54) **EXPANSION VALVE FOR A VAPOR COMPRESSION SYSTEM**
EXPANSIONSVENTIL FÜR EIN DAMPFKOMPRESSIONSSYSTEM
SOUPAPE DE DÉTENTE POUR UN SYSTÈME DE COMPRESSION DE VAPEUR

(43) Date of publication of application: 29.03.2017
(73) Proprietor: Honeywell spol s.r.o., 14800 Prague 4 (CZ)
(72) Inventor: MCGAHAN, Paul, Morris Plains, New Jersey 07950 (US)
(74) Representative: Houghton, Mark Phillip

(56) References cited:
- EP-A1- 1 087 158
- EP-A1- 1 178 270
- EP-A1- 2 386 810
- EP-A1- 2 801 771
- EP-A2- 1 055 888
- US-A- 2 618 290

## Description

### Technical Field

The present disclosure relates to an expansion valve for a vapor compression system.

### Background

A heat pump, such as, for instance, a residential or commercial refrigerator, freezer, or air conditioner, may use a vapor compression circuit to transport heat from a low temperature reservoir (e.g., outdoor air) to a high temperature reservoir (e.g., hydronic heating water). The vapor compression circuit may be designed and/or controlled in such a way as to transport the heat with the highest possible efficiency. The efficiency of the vapor compression circuit can be characterized by the ratio of the transported heat to the mechanical and/or electrical energy consumption (e.g., compressor electric power consumption) of the circuit, and this ratio can be denoted as the coefficient of performance for the heat pump.

One way the efficiency (e.g., the coefficient of performance) of a heat pump can be improved is by operating the vapor compression circuit with a degree of superheating. The vapor compression circuit of a typical heat pump may include an expansion valve to control (e.g., regulate) the superheating occurring in the circuit. Such superheating control may also ensure the vapor compression circuit operates safely.

Previous expansion valves used in vapor compression circuits may be passive, constant pressure valves, which can be mechanically set to operate at a particular (e.g., nominal) working condition. However, such passive constant pressure valves may not be suitable for advanced vapor compression circuits, whose working conditions (e.g., pressure and/or enthalpy) may be modulated during operation.

Other previous expansion valves may be active, electronic valves, which can be controlled to modulate according to the working conditions of the vapor compression circuit. However, the operation of such active electronic valves may be limited by low-bandwidth, and/or by non-linear operating characteristics (e.g., by the pressure dynamics of the vapor compression circuit superheating being faster than the temperature dynamics)

EP 2 386 810 A1 discloses an expansion valve having the features in the preamble of claim 1.

### Brief Description of the Drawings

Figure 1 illustrates an example of an expansion valve in accordance with one or more embodiments of the present disclosure.
Figure 2 illustrates an example of a vapor compression system in accordance with one or more embodiments of the present disclosure.
Figure 3 illustrates an example of a controller of a vapor compression system in accordance with one or more embodiments of the present disclosure.

### Detailed Description

An expansion valve for a vapor compression system is described herein. For example, one or more embodiments include a needle, a spring coupled to the needle, a screw coupled to the spring, and a motor configured to drive the screw to cause the spring to provide pressure on the needle in a downward direction at a same time as refrigerant is providing pressure on the needle and causing the needle to move in an upward direction to regulate a flow rate of refrigerant through the expansion valve.

An expansion valve for a vapor compression system (e.g., circuit) in accordance with the present disclosure may have high bandwidth and be able to attenuate high frequency disturbances in the vapor compression system, while at the same time being able to modulate according to the working conditions (e.g., enthalpy and/or pressure) of the vapor compression system. As such, an expansion valve in accordance with the present disclosure can control (e.g., regulate) superheating in the vapor compression system more effectively than previous expansion valves, and/or may have a longer product life than previous expansion valves.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

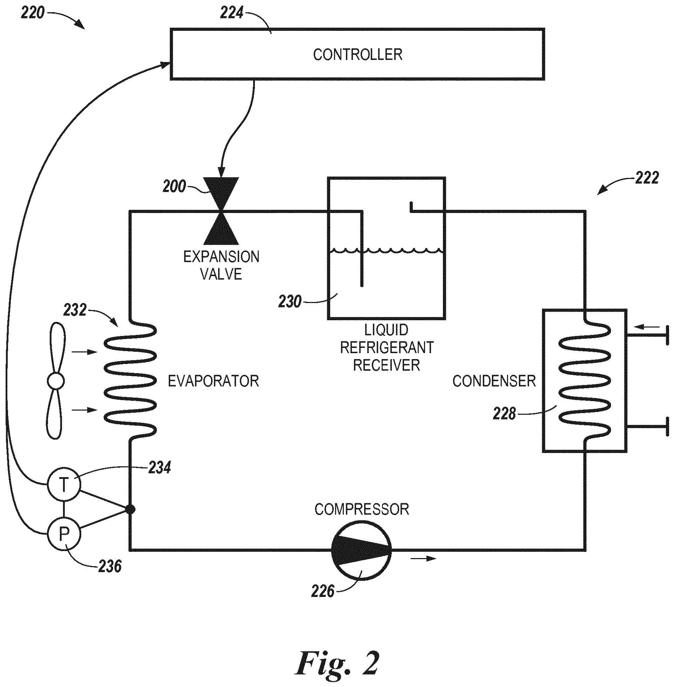

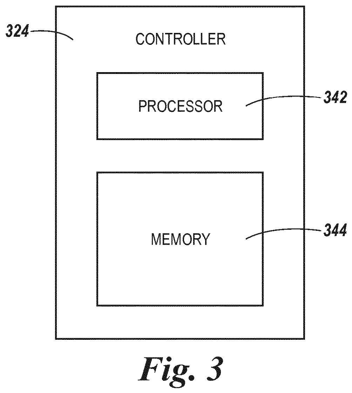

The figures herein follow a numbering convention in which the first digit or digits correspond to the drawing figure number and the remaining digits identify an element or component in the drawing. Similar elements or components between different figures may be identified by the use of similar digits. For example, 224 may reference element "24" in Figure 2, and a similar element may be references as 324 in Figure 3.

As used herein, "a" or "a number of" something can refer to one or more such things. For example, "a number of sensors" can refer to one or more sensors.

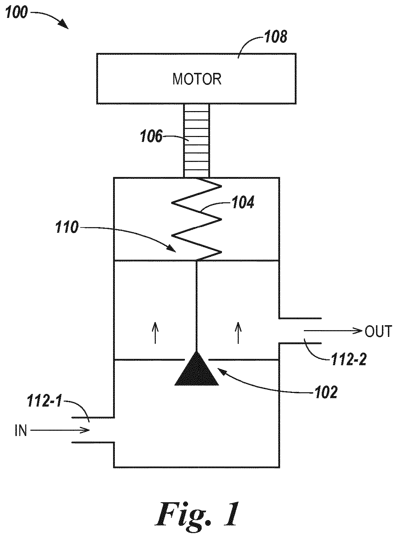

Figure 1 illustrates an example of an expansion valve 100 in accordance with one or more embodiments of the present disclosure. Expansion valve 100 can be an expansion valve for a vapor compression system, such as, for instance, vapor compression system 220 further described in connection with Figure 2. For example, expansion valve 100 can be used to control (e.g., regulate) superheating in the vapor compression system, as will be further described herein (e.g., in connection with Figure 2).

As shown in Figure 1, expansion valve 100 can include a needle 102, a spring 104, a screw 106, a motor 108, a diaphragm 110, and openings 112-1 and 112-2. Screw 106 can be, for example, an adjustment screw. Motor 108 can be, for example, a stepper motor.

As shown in Figure 1, motor 108 can be coupled to screw 106, screw 106 can be coupled to spring 104, and spring 104 can coupled to needle 102. For instance, spring 104 can be coupled to needle 102 by diaphragm 110 (e.g., spring 104 can be coupled to diaphragm 110, which can be coupled to needle 102), such that when spring 104 compresses or expands it moves diaphragm 110, which in turn adjusts the position of needle 102.

Motor 108 can drive screw 106 to cause spring 104 to provide (e.g., apply) pressure on needle 102 to regulate the flow rate of a refrigerant (e.g., the amount of refrigerant that can flow) through expansion valve 100. That is, the position of needle 102 in expansion valve 100 can regulate the flow rate of the refrigerant through expansion valve 100, and the position of needle 102 can be regulated by motor 108 driving screw 106 to cause spring 104 to provide pressure on needle 102.

For example, refrigerant (e.g., liquid refrigerant) can enter expansion valve 100 through opening 112-1, as illustrated in Figure 1. The refrigerant can provide pressure on needle 102, which can cause needle 102 to move upward (represented by the upward-pointing arrows in Figure 1), which can allow the refrigerant to flow through opening 112-2 and exit expansion valve 100, as illustrated in Figure 1. At the same time, motor 108 can be driving screw 106 to cause spring 104 to provide pressure on needle 102 in the direction opposite the pressure being applied by the refrigerant (e.g., in a downward direction), which can dictate how far upward needle 102 moves, thereby regulating the flow rate of the refrigerant through opening 112-2 and out of expansion valve 100. For example, opening 112-2 may be completely, partially, or not at all obstructed by needle 102, depending on the amount of pressure being provided on needle 102 by the refrigerant and by spring 104.

Figure 2 illustrates an example of a vapor compression system 220 in accordance with one or more embodiments of the present disclosure. As shown in Figure 2, vapor compression system 220 can include a vapor compression circuit 222 and a controller 224. Vapor compression circuit 222 can be part of a heat pump, such as, for instance, a residential or commercial refrigerator, freezer, or air conditioner. Controller 224 can be a microcontroller integrated into the heat pump, or controller 224 can be separate from the heat pump and communicate with vapor compression circuit 222 via a wired or wireless network, as will be further described herein.

As shown in Figure 2, vapor compression circuit 222 can include a compressor 226, a condenser 228, a liquid refrigerant receiver 230, an expansion valve 200, and an evaporator 232. Expansion valve 200 can be, for example, expansion valve 100 previously described in connection with Figure 1. Controller 224 can operate (e.g., control the operation of) expansion valve 200, as will be further described herein.

A refrigerant can flow (e.g., circulate and/or cycle) through vapor compression circuit 222 in a counterclockwise direction, as indicated in Figure 2. For example, the refrigerant can enter compressor 226 as a superheated vapor. The refrigerant can be, for example, any type (e.g., class) of refrigerant, such as R1234yf, R410A, R134a, or R717, among others. However, embodiments of the present disclosure are not limited to a particular type of refrigerant.

Compressor 226 can compress the refrigerant to a higher pressure. The hot, compressed vapor can then flow (e.g., be routed) to condenser 228. That is, condenser 228 can be downstream from compressor 226 in vapor compression circuit 222, as illustrated in Figure 2.

Condenser 228 can condense (e.g., cool) the refrigerant (e.g., superheated) vapor into a liquid. For example, condenser 228 can include a coil or tubes, and condenser 228 can condense the refrigerant vapor into a liquid by flowing the refrigerant through the coil or tubes while flowing cool water or cool air across the coil or tubes, such that heat from the refrigerant is carried away by the water or air.

The condensed liquid refrigerant can then flow to liquid refrigerant receiver 230. That is, liquid refrigerant receiver 230 can be downstream from condenser 228 in vapor compression circuit 222, as illustrated in Figure 2.

Liquid refrigerant receiver 230 can be a pressure accumulation vessel that holds (e.g., stores) excess liquid refrigerant present in vapor compression circuit 222. By holding the excess liquid refrigerant, receiver 230 can adjust (e.g., minimize) the active charge of the refrigerant, which can reduce the sensitivity of vapor compression circuit 22 to the refrigerant charge (e.g., to changes in the charge of the refrigerant during operation of the circuit).

Liquid refrigerant receiver 230 can include an upstream port through which the condensed liquid refrigerant enters (e.g., is input), and a downstream port through which the condensed liquid refrigerant exits (e.g., is output). The upstream port can have a nozzle to promote mixing and heat exchange of the input refrigerant within a vapor region, and the downstream port can have a pipe reaching to the bottom of a liquid region. During steady state operation of vapor compression circuit 222, if liquid refrigerant receiver 230 has some level of liquid refrigerant stored therein, then a vapor-liquid equilibrium can build up, and the downstream output of the receiver is always a saturated liquid. Further, if liquid refrigerant receiver 230 is isolated, the upstream input will also be a saturated liquid.

After the condensed (e.g., saturated) liquid refrigerant exits liquid refrigerant receiver 230, the condensed liquid refrigerant can flow through expansion valve 200. That is, expansion valve 200 can be located downstream from liquid refrigerant receiver 230 in vapor compression circuit 222, as illustrated in Figure 2.

Expansion valve 200 can adjust (e.g., further decrease) the pressure of the condensed liquid refrigerant. That is, expansion valve 200 can be operated by controller 224 (e.g., via a direct connection or a wired or wireless network(s), as will be further described herein) to decrease the pressure of the condensed liquid refrigerant output from liquid refrigerant receiver 230. This decrease in pressure can be an abrupt pressure decrease that results in an adiabatic flash evaporation of part of the liquid refrigerant, which can lower the temperature of the refrigerant to a temperature that is lower than the temperature of the space to be cooled.

After flowing through expansion valve 200, the liquid refrigerant can enter the coil or tubes of evaporator 232. That is, evaporator 232 can be located downstream from expansion valve 200, as illustrated in Figure 2. A fan can circulate warm air from the enclosed space across the coil or tubes carrying the cold liquid refrigerant, which can cool the air and thus lower the temperature of the enclosed space. At the same time, the warm air evaporates the liquid refrigerant, so that the refrigerant is once again a saturated vapor. The saturated vapor can exit evaporator 232 and flow to compressor 226, and the cycle can be repeated.

As shown in Figure 2, vapor compression system can include a pressure sensor 236 and a temperature sensor 234. Pressure sensor 236 and temperature sensor 234 can determine (e.g., sense) the pressure and temperature, respectively, of the saturated refrigerant vapor after it exits evaporator 232 (e.g., between evaporator 232 and condenser 226).

Controller 224 can receive (e.g., via a direct connection or a wired or wireless network, as will be further described herein) the sensed pressure and temperature from sensors 236 and 234, respectively, and utilize the sensed pressure and temperature to control (e.g., regulate) the superheating of the refrigerant vapor performed by compressor 226. That is, controller 224 can be a superheating controller that can operate expansion valve 200 based on the sensed pressure and temperature to control the superheating of the refrigerant in vapor compression circuit 222.

For example, controller 224 can operate the motor of expansion valve 200 (e.g., motor 108 described in connection with Figure 1) to drive the screw of expansion valve 200 (e.g., screw 106 described in connection with Figure 1) to cause the spring of expansion valve 200 (e.g., spring 104 described in connection with Figure 1) to provide pressure on the needle of expansion valve 200 (e.g., needle 102 previously described in connection with Figure 1) to regulate the flow rate of the refrigerant through expansion valve 200 (e.g., through opening 112-2 described in connection with Figure 1). For instance, controller 224 can operate the motor to drive the screw to cause the spring to provide a particular amount of pressure on the needle, such that the flow rate of the refrigerant through expansion valve 200 is a particular flow rate (e.g., such that the refrigerant flows through opening 112-2 at the particular flow rate).

The particular amount of pressure to be provided on the needle can be, for example, based on the sensed pressure and temperature from sensors 236 and 234, respectively. For instance, controller 224 can determine, based on the sensed pressure and temperature from sensors 236 and 234, respectively, the particular amount of pressure needed to be provided on the needle for the refrigerant to flow through expansion valve 200 at the particular flow rate, and can operate the motor to drive the screw to cause the spring to provide that amount of pressure on the needle.

The particular flow rate of the refrigerant through expansion valve 200 can be, for example, the flow rate needed to superheat the refrigerant by a particular amount (e.g., by a particular number of degrees). That is, controller 200 can ensure the refrigerant is superheated by the particular amount by operating the motor of expansion valve 200 to drive the screw to cause the spring to provide the particular amount of pressure on the needle needed for the refrigerant to flow through expansion valve 200 at the particular flow rate.

The superheating of the refrigerant can refer to the refrigerant being heated to a temperature than its boiling point without boiling, and/or to the amount (e.g., number of degrees) by which the refrigerant is superheated (e.g., the magnitude of the temperature increase of the refrigerant). The amount by which the refrigerant is superheated can correspond to the difference between an evaporating temperature and the temperature of the refrigerant after exiting evaporator 232. The evaporating temperature can refer to the temperature at which the liquid refrigerant evaporates in evaporator 232, and the temperature of the refrigerant after exiting evaporator 232 can correspond to the temperature sensed by temperature sensor 234.

Superheating the refrigerant by the particular amount can increase the efficiency of vapor compression circuit 222 (e.g., the efficiency of the heat pump that includes circuit 222). For example, superheating the refrigerant by the particular amount can increase the coefficient of performance of vapor compression circuit 222 (e.g., the ratio of the amount of heat transported by circuit 222 to the mechanical and/or electrical energy consumption of the circuit). That is, the particular amount by which the refrigerant is superheated can be an amount of superheating that increases the efficiency (e.g., increases the coefficient of performance) of vapor compression circuit 222. For example, the particular amount by which the refrigerant is superheated can be the amount of superheating that results in the greatest possible efficiency (e.g., coefficient of performance) increase for vapor compression circuit 222 (e.g., the amount that results in optimal superheating of the refrigerant).

Controller 224 can communicate with expansion valve 200, temperature sensor 234, and pressure sensor 236 (e.g., control the operation of expansion valve 200 and receive sensed temperatures and pressures from sensors 234 and 236, respectively) via a direct (e.g., wired) connection (e.g., in embodiments in which controller 224 is integrated into the heat pump), or via a wired or wireless network or networks (e.g., in embodiments in which controller 224 is separate from the heat pump). The wireless network(s) can be, for instance, a wide area network (WAN) such as the Internet, a local area network (LAN), a personal area network (PAN), a campus area network (CAN), or metropolitan area network (MAN), among other types of wireless networks.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network.

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

Controller 224 can operate expansion valve 200 in either active mode or passive mode. In active mode, controller 224 can modulate the operation of expansion valve 200 in response to changes in the temperature and/or pressure of the refrigerant sensed by sensors 234 and 236, respectively. For example, controller 224 can operate the motor of expansion valve 200 to drive the screw of expansion valve 200 to a plurality of different positions to cause the spring of expansion valve 200 to provide a plurality of different pressures on the needle of the expansion valve to regulate the flow rate of the refrigerant, such that the refrigerant can continue to flow through expansion valve 200 at the particular flow rate even as the temperature and/or pressure of the refrigerant changes. That is, if sensors 234 and/or 236 sense a change in the temperature and/or pressure, respectively, of the refrigerant, controller 224 can adjust the operation of the motor to drive the screw to the position needed to cause the spring to adjust the amount of pressure being provided on the needle such that the refrigerant continues to flow through expansion valve 200 at the particular flow rate responsive to the change in temperature and/or pressure.

In passive mode, controller 224 can operate the motor of expansion valve 200 to drive the screw of expansion valve 200 to a fixed position, so that only the particular amount of pressure is provided on the needle of expansion valve 200 to regulate the flow rate of the refrigerant. That is, in passive mode, controller 224 may not adjust the operation of expansion valve 200 in response to a change in temperature and/or pressure sensed by sensors 234 and/or 236, respectively. Rather, the position of the screw, and therefore the amount of pressure being provided on the needle of the expansion valve, may be fixed by controller 224 to attenuate high frequency disturbances in the vapor compression system.

Figure 3 illustrates an example of a controller 324 of a vapor compression system in accordance with one or more embodiments of the present disclosure. Controller 324 can be, for example, controller 224 of vapor compression system 220 previously described in connection with Figure 2.

As shown in Figure 3, controller 324 can include a memory 344 and a processor 342. Memory 344 can be any type of storage medium that can be accessed by processor 342 to perform various examples of the present disclosure. For example, memory 344 can be a non-transitory computer readable medium having computer readable instructions (e.g., computer program instructions) stored thereon that are executable by processor 342 to operate an expansion valve (e.g., expansion valve 200 previously described in connection with Figure 2) in a vapor compression system in accordance with the present disclosure. That is, processor 342 can execute the executable instructions stored in memory 344 to operate an expansion valve in a vapor compression system in accordance with the present disclosure.

Memory 344 can be volatile or nonvolatile memory. Memory 344 can also be removable (e.g., portable) memory, or non-removable (e.g., internal) memory. For example, memory 344 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 344 is illustrated as being located in controller 324, embodiments of the present disclosure are not so limited. For example, memory 344 can also be located internal to another computing resource (e.g., enabling computer readable instructions to be downloaded over the Internet or another wired or wireless connection).

It is to be understood that the above description has been made in an illustrative fashion, and not a restrictive one. The scope of protection is as defined in the claims.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims define the scope of protection.

## Claims

1. An expansion valve (100, 200) for a vapor compression system (220), comprising:
a needle (102);
a spring (104) coupled to the needle (102);
a screw (106) coupled to the spring (104); and
a motor (108) configured to drive the screw (106) to cause the spring (104) to provide pressure on the needle (102), **characterised in that** the pressure is provided in a downward direction at a same time as refrigerant is providing pressure on the needle (102) and causing the needle (102) to move in an upward direction to regulate a flow rate of the refrigerant through the expansion valve (100);
wherein the motor (108) is configured to drive the screw (106) to cause the spring (104) to provide a particular amount of pressure on the needle (102) such that the flow rate of the refrigerant is a particular flow rate;
wherein the particular flow rate is a flow rate needed to superheat the refrigerant by a particular amount.

2. The expansion valve (100, 200) of claim 1, wherein the particular amount of pressure is based on a pressure and temperature of the refrigerant.

3. The expansion valve (100, 200) of claim 1, wherein the motor (108) is configured to drive the screw (106) to a fixed position to cause the spring (104) to provide the particular amount of pressure on the needle (102).

4. The expansion valve (100, 200) of claim 1, wherein the screw (106) is an adjustment screw.

5. The expansion valve (100, 200) of claim 1, wherein the motor (108) is a stepper motor.

6. The expansion valve (100, 200) of claim 1, wherein the expansion valve (100, 200) includes a diaphragm (110) configured to couple the spring (104) to the needle (102).

7. The expansion valve (100, 200) of claim 1, wherein the expansion valve (100, 200) includes:
a first opening (112-1) through which the refrigerant enters the expansion valve (100, 200); and
a second opening (112-2) through which the refrigerant exits the expansion valve (100, 200);
wherein the needle (102) regulates the flow rate of the refrigerant through the second opening (112-2).

8. The expansion valve (100, 200) of claim 1, wherein the motor (108) is configured to drive the screw (106) to a plurality of different positions to cause the spring (104) to provide a plurality of different pressures on the needle (102) to regulate the flow rate of the refrigerant through the expansion valve (100, 200).

## Patentansprüche

1. Expansionsventil (100, 200) für ein Dampfkompressionssystem (220), umfassend:
eine Nadel (102);
eine mit der Nadel (102) gekoppelte Feder (104);
eine mit der Feder (104) gekoppelte Spindel (106); und
einen Motor (108), der dazu ausgelegt ist, die Spindel (106) anzutreiben, um zu bewirken, dass die Feder (104) Druck auf die Nadel (102) ausübt, **dadurch gekennzeichnet, dass** der Druck in einer Abwärtsrichtung zur gleichen Zeit ausgeübt wird, zu der Kältemittel Druck auf die Nadel (102) ausübt und bewirkt, dass sich die Nadel (102) in einer Aufwärtsrichtung bewegt, um eine Durchflussmenge des Kältemittels durch das Expansionsventil (100) zu regeln;
wobei der Motor (108) dazu ausgelegt ist, die Spindel (106) anzutreiben, um zu bewirken, dass die Feder (104) eine bestimmte Menge an Druck auf die Nadel (102) ausübt, sodass die Durchflussmenge des Kältemittels eine bestimmte Durchflussmenge ist;
wobei die bestimmte Durchflussmenge eine Durchflussmenge ist, die benötigt wird, um das Kältemittel um einen bestimmten Betrag zu überhitzen.

2. Expansionsventil (100, 200) gemäß Anspruch 1, wobei die bestimmte Menge an Druck auf einem Druck und einer Temperatur des Kältemittels basiert.

3. Expansionsventil (100, 200) gemäß Anspruch 1, wobei der Motor (108) dazu ausgelegt ist, die Spindel (106) in eine festgelegte Stellung anzutreiben, um zu bewirken, dass die Feder (104) die bestimmte Menge an Druck auf die Nadel (102) ausübt.

4. Expansionsventil (100, 200) gemäß Anspruch 1, wobei die Spindel (106) eine Einstellspindel ist.

5. Expansionsventil (100, 200) gemäß Anspruch 1, wobei die Motor (108) ein Schrittmotor ist.

6. Expansionsventil (100, 200) gemäß Anspruch 1, wobei das Expansionsventil (100, 200) eine Membran (110) aufweist, die dazu ausgelegt ist, die Feder (104) mit der Nadel (102) zu koppeln.

7. Expansionsventil (100, 200) gemäß Anspruch 1, wobei das Expansionsventil (100, 200) enthält:
eine erste Öffnung (112-1), durch die das Kältemittel in das Expansionsventil (100, 200) eintritt; und
eine zweite Öffnung (112-2), durch die das Kältemittel aus dem Expansionsventil (100, 200) austritt;
wobei die Nadel (102) die Durchflussmenge des Kältemittels durch die zweite Öffnung (112-2) regelt.

8. Expansionsventil (100, 200) gemäß Anspruch 1, wobei der Motor (108) dazu ausgelegt ist, die Spindel (106) in eine Vielzahl von unterschiedlichen Stellungen anzutreiben, um zu bewirken, dass die Feder (104) eine Vielzahl von unterschiedlichen Drücken auf die Nadel (102) ausübt, um die Durchflussmenge des Kältemittels durch das Expansionsventil (100, 200) zu regeln.

## Revendications

1. Soupape de détente (100, 200) pour un système de compression de vapeur (220), comprenant :
une aiguille (102) ;
un ressort (104) couplé à l'aiguille (102) ;
une vis (106) couplée au ressort (104) ; et
un moteur (108) configuré pour entraîner la vis (106) afin d'amener le ressort (104) à fournir une pression sur l'aiguille (102), **caractérisé en ce que** la pression est fournie dans une direction descendante en même temps que le réfrigérant fournit une pression sur l'aiguille (102) et amène l'aiguille (102) à se déplacer dans une direction ascendante pour réguler un débit du réfrigérant à travers la soupape de détente (100),
le moteur (108) étant configuré pour entraîner la vis (106) afin que le ressort (104) fournisse une quantité particulière de pression sur l'aiguille (102) de telle sorte que le débit du réfrigérant soit un débit particulier ;
le débit particulier étant un débit nécessaire pour surchauffer le réfrigérant d'une quantité particulière.

2. Soupape de détente (100, 200) selon la revendication 1, la quantité particulière de pression étant basée sur une pression et une température du réfrigérant.

3. Soupape de détente (100, 200) selon la revendication 1, le moteur (108) étant configuré pour entraîner la vis (106) dans une position fixe afin que le ressort (104) fournisse la quantité particulière de pression sur l'aiguille (102).

4. Soupape de détente (100, 200) selon la revendication 1, la vis (106) étant une vis de réglage.

5. Soupape de détente (100, 200) selon la revendication 1, le moteur (108) étant un moteur pas à pas.

6. Soupape de détente (100, 200) selon la revendication 1, la soupape de détente (100, 200) comprenant un diaphragme (110) configuré pour coupler le ressort (104) à l'aiguille (102).

7. Soupape de détente (100, 200) selon la revendication 1, la soupape de détente (100, 200) comprenant :
une première ouverture (112-1) à travers laquelle le réfrigérant entre dans la soupape de détente (100, 200) ; et
une deuxième ouverture (112-2) à travers laquelle le réfrigérant sort de la soupape de détente (100, 200) ;
l'aiguille (102) régulant le débit du réfrigérant à travers la deuxième ouverture (112-2).

8. Soupape de détente (100, 200) selon la revendication 1, le moteur (108) étant configuré pour entraîner la vis (106) vers une pluralité de positions différentes pour amener le ressort (104) à fournir une pluralité de pressions différentes sur l'aiguille (102) pour réguler le débit du réfrigérant à travers la soupape de détente (100, 200).
